# EUROPÄISCHE PATENTSCHRIFT

(11) **EP 0 304 678 B1**
(45) Veröffentlichungstag und Bekanntmachung des Hinweises auf die Patenterteilung: **27.10.1993**
(21) Anmeldenummer: 88112499.4
(22) Anmeldetag: 02.08.1988
(51) Int. Cl.: B44B 5/02, B21D 43/00

(54) **Vorrichtung zum Aussondern von Ausschussronden aus dem Rondenkanal eines Prägeautomaten**
Device for excluding damaged round blanks from the round blanks supply duct of an automatic embossing machine
Dispositif pour exclure des flans ronds endommagés d'un canal d'alimentation de flans ronds d'une machine automatique d'emboutissage

(30) Priorität: 27.08.1987 DE 3728649
(43) Veröffentlichungstag der Anmeldung: 01.03.1989
(73) Patentinhaber: L. SCHULER GmbH, D-73012 Göppingen (DE)
(72) Erfinder: Ludwig, Albert, D-8321 Lauterstein (DE); Philipp, Karl-Heinz, D-7320 Göppingen (DE); Hartl, Gerhard, D-7320 Göppingen (DE); Jarosch, Berthold, D-7344 Gingen (DE); Greger, Horst, D-8025 Unterhaching (DE)

(56) Entgegenhaltungen:
- GB-A- 2 106 686
- US-A- 1 652 032
- US-A- 2 861 579
- US-A- 3 200 926
- US-A- 3 283 551
- US-A- 3 289 802
- US-A- 3 559 790
- US-A- 3 734 260
- US-A- 3 896 916
- WERKSTATTSTECHNIK, ZEITSCHRIFT FUR INDUSTRIELLE FERTIGUNG. vol. 69, no. 3,1979, BERLIN DE Seiten 173 - 179; W. BEISEL: "MÜNZPRÄGEN Maschinen, Werkzeuge,Verfahren"
- SHEET METAL INDUSTRIES. vol. 54, no. 4, April 1977, REDHILL GB Seiten 286 -292; G.W.J. TROWBRIDGE: "COINING PRESSES-YESTERDAY AND TODAY"

## Beschreibung

Die Erfindung betrifft eine Vorrichtung zum Aussondern von Ronden entsprechend dem Oberbegriff des Anspruchs 1.

Die Erhöhung der Produktionsleitung von Prägeautomaten erfordert eine taktabhängig - im Takt des Stößels - reagierende Rondenkontrolle im Zuführsystem. Der Ausstoß der Ausschußronden soll automatisch erfolgen und in einer solchen Geschwindigkeit ablaufen, daß auch bei hohen Hubzahlen ein Stillstand des Prägeautomaten vermieden wird.

Ronden werden bei Prägeautomaten über Rotations- oder Vibrationstommeln einem Rondenkanal und bei vertikalen Prägeautomaten über diesen z.B. einer Vereinzelungseinrichtung zugeführt. Die aus dem Vereinzelungsschacht vermittels Vereinzelungsschieber an einen Revolverteller abgegebenen Ronden sind der Prägestation zuzuführen. Zur Vermeidung von Falschprägungen ist in dem Zuführkanal eine Rondenkontrollstation vorgesehen (eigene Ausführung), mit der Ausschußronden ausgesondert werden. Die aus der Trommel kommenden Ronden durchlaufen auf Dicke und Durchmesser eingestellte Bereiche. Eine gebogene oder zu dicke Ronde sowie auch die im Durchmesser von der Soll-Ronde abweichende Ronde blockiert hierbei die weitere Zufuhr von Ronden in den Zufuhrkanal zwischen Rondenkontrollstation und Vereinzelungseinrichtung.

Über je einen Schieber wird bei Auftreten einer Störung (Auftreten einer Ausschußronde), die über Sensoren festzustellen ist, sowohl die Zufuhr zu Rondenkontrolleinrichtung als auch die Abfuhr in den weiterführenden Rondenkanal verhindert. Die ermittelte Ausschußronde wird durch ausströmende Luft aus dem Bereich der Rondenkontrolleinrichtung ausgeblasen. Der Prägeautomat läuft noch solange, wie Ronden in Zufuhrkanal und Vereinzelungseinrichtung und bei Verwendung eines Revolvertellers, dann auch in einem solchen vorhanden sind. Es hat sich nun gezeigt, daß nur bei Verwendung von zwei Zufuhrkanälen zwischen Rondenkontrolleinrichtung und Vereinzelungsschieber, die einen wesentlich größeren Platzbedarf erfordern, ausreichend gespeicherte Ronden vorhanden sind, die Reaktionszeit der Rondenkontrolleinrichtung zu überbrücken. Wie Versuchsläufe ergeben haben, ist eine weitere Erhöhung der Hubzahl des Prägeautomaten auf z.B. 700 Hübe pro Minute und darüber, soll eine solche Rondenkontrolleinrichtung verwendet werden, nicht möglich.

Eine ähnliche Einrichtung zeigt auch die US-A-3 283 551.

Demgegenüber liegt die Aufgabe der Erfindung in der Schaffung einer Rondenkontrolleinrichtung gattungsgemäßer Art, deren Reaktionszeit zum Ausstoßen ausgesonderter Ronden zu verringern war, um eine wesentliche Erhöhung der Zahl an Prägehüben von z.B. 400 auf 700 Hübe pro Minute und darüber des Prägeautomaten zu ermöglichen, ohne daß eine weitere zusätzliche Zwischenspeicherung von Ronden erforderlich wäre.

Diese Aufgabe ist gelöst durch die im Kennzeichen des Anspruchs 1 angegebene Lösung. Die weiteren Ansprüche benennen Merkmale bevorzugter Ausgestaltungen der Erfindung.

Neben den Vorteilen eines wesentlich höheren Ausstoßes des Prägeautomaten mit der Rondenkontrolleinrichtung nach der Erfindung hat sich in vorteilhafter Weise ergeben, daß nur der Zulauf zu der Rondenkontrolleinrichtung durch eine Stoppereinrichtung zu sperren ist. Die die Sollmaße vorgebenden Formstücke dienen gleichzeitig der Freigabe des Ausstoßkanals, d.h. das Feststellen einer Ausschußronde bewirkt eine Freigabebewegung des Teiles, das die Abweichung festgestellt hat. Die Reaktionszeiten konnten durch diese Erkenntnis wesentlich verkürzt werden. Die Formustücke sind zumindest in den die Soll- und Grenzmaße aufweisenden Bereichen spiegelgleich, so daß von daher deren Fertigung und Montage erleichtert ist. Die Rondenkontrolleinrichtung ist mit wenigen Handgriffen auf eine Ronde mit anderen Abmessungen einrichtbar.

Anhand eines in der Zeichnung dargestellten Ausführungsbeispiels soll im folgenden die Erfindung näher erläutert werden.

Dabei sind gezeigt in
- Fig. 1,: wesentliche Elemente eines Prägeautomaten in einer Verkleinerung mit der angedeuteten Lage einer Vorrichtung nach der Erfindung,
- Fig. 2,: eine Draufsicht auf die Vorrichtung nach der Erfindung,
- Fig. 3,: eine Schnittansicht entsprechend dem Schnittverlauf III-III in Fig. 2 und
- Fig. 4: eine Schnittansicht entsprechend dem Schnittverlauf IV-IV in Fig. 2 und
- Fig. 5,: eine Schnittansicht entsprechend dem Schnittverlauf V-V in Fig. 2.

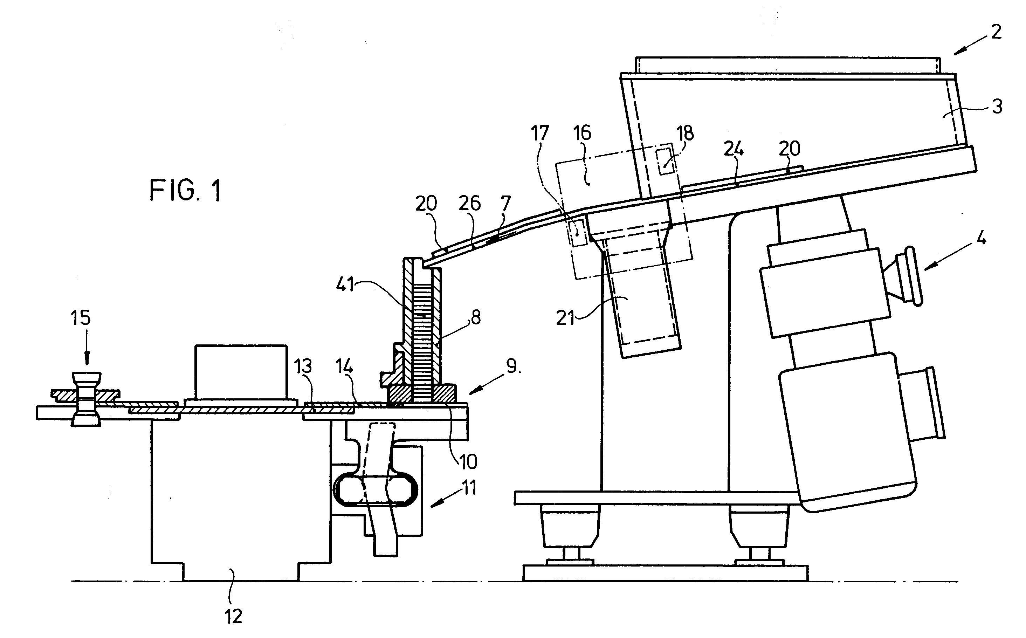

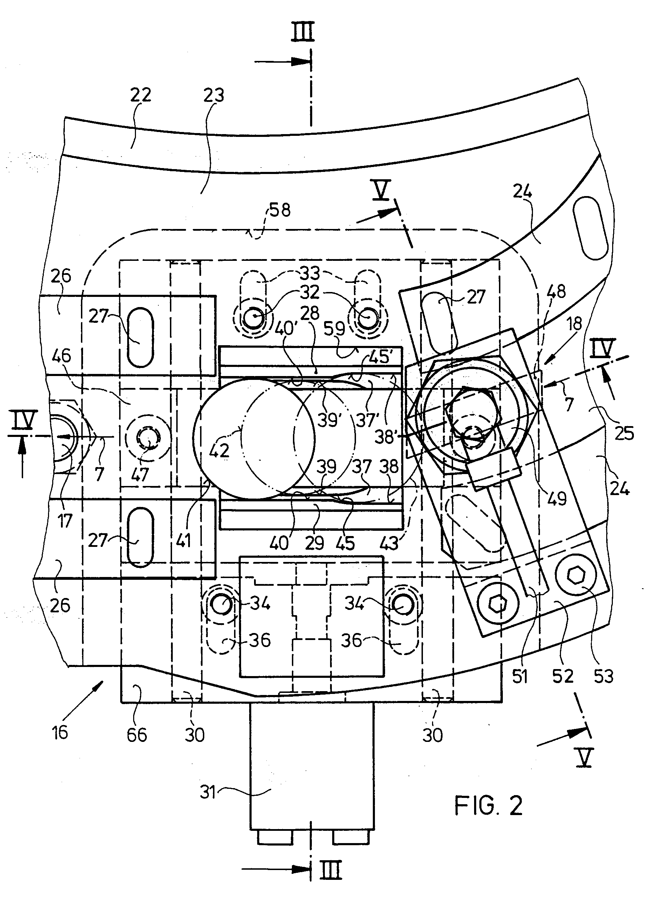

Der Prägeautomat, der hier ein vertikal wirkender ist, umfaßt entsprechend Fig. 1 eine Dosiereinrichtung 2 mit einer Dosiertrommel 3 und einem Dreh- oder auch Vibrationsantrieb 4. Aus der Dosiertrommel 3 werden Ronden 41 bis 44 über einen Rondenkanal 7, der aus aus Führungsleisten 20, 24 und 26 und einem Auflageblech 23 (Fig. 2) gebildet ist, einer Vereinzelungseinrichtung 9 zugeführt. Diese besteht im wesentlichen aus einem Vereinzelungsschacht 8, einem Vereinzelungsschieber 10 unter diesem und einer Kurvensteuerung 11 für die Vereinzelungsbewegung und bewirkt eine Abgabe einzelner Ronden 41 an einen vermittels Schaltgetriebe 12 schrittweise getriebenen Revolverteller 13 mit Aufnahmetaschen 14. Die Ronden 41 in diesem werden im Takt des Prägeautomaten einem Prägewerkzeug 15 zugeführt.

In den Rondenkanal 7 ist eine Rondenkontrolleinrichtung 16 eingebracht zum Aussondern von Ausschußronden 42 bis 44. Mit 18 ist eine Stoppereinrichtung angedeutet, die immer dann den Zulauf zu der Rondenkontrolleinrichtung 16 versperrt, wenn ein Sensor 17 im Rondenkanal 7 zwischen der Rondenkontrolleinrichtung 16 und dem Vereinzelungsschacht 8 die Abwesenheit einer Ronde feststellt.

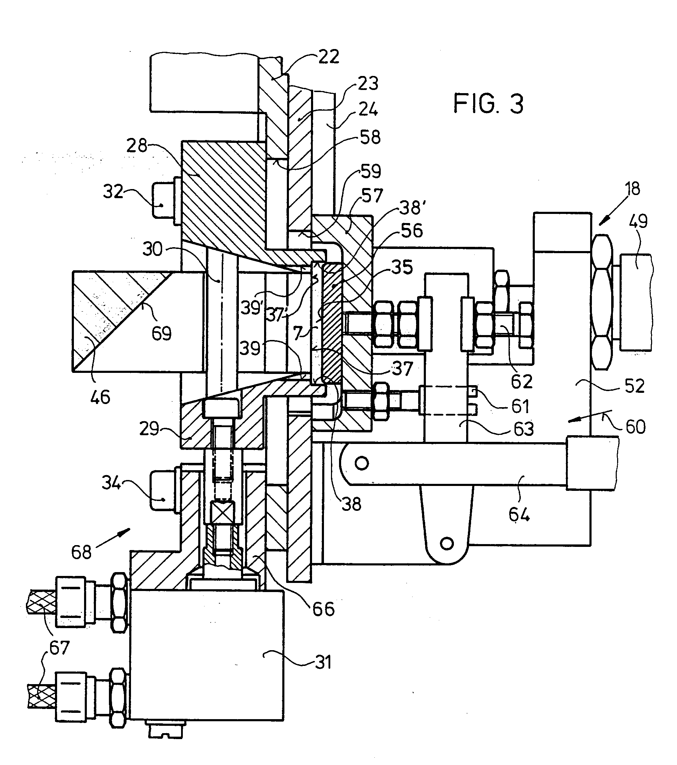

Die in Fig. 2 dargestellte Rondenkontrolleinrichtung 16 ist in Durchbrüche 58, 59 von Grundplatte 22 und Auflageblech 23 eingesetzt. Die den Rondenkanal 7 seitlich begrenzenden Führungsleisten 24, 26 sind in Langlöchern 27 auf das Durchmessermaß der Ronden 41 bis 44 einstellbar. Wie Fig. 2 i.V. m. Fig. 3 erkennen läßt, sind ein hinteres Formstück 28 und ein vorderes Formstück 29 von unten gegen die Grundplatte 22 gesetzt. Das Formstück 28 ist in Langlöchern 33 über Schraubmittel 32 einstellbar verschraubt. Das Formstück 29 ist in Führungsstiften 30 beweglich geführt. Zum Bewegen des Formstücks 29 dient ein Druckzylinder 31, der an einem Träger 66 festgesetzt ist. Die Einstellung des Trägers 66 erfolgt in Langlöchern 36 vermittels Befestigungsmittel 34. Der Träger 66 nimmt in Bohrungen noch die Gegenseite der Führungsstifte 30 auf. Die Lage des Formstücks 29 ist durch Mittel zum Justieren 68 feinabstimmbar. Weiterhin ist gegen die Grundplatte 22 von unten ein Brückenteil 46 über Befestigungsmittel 47 angebracht, die eine Ablaufschräge 69 aufweist zum Ableiten von Ausschußronden 42 bis 44 in den in Fig. 1 angedeuteten Ausschußbehälter 21. Mit 25 ist der Grund des Rondenkanals 7 angedeutet, auf dem die Ronden 41 bis 44 unter Schwerkraft gleiten. In gleicher Höhe befinden sich an den Formstücken 28, 29 Auflageflächen 37, 37′. Das Formstück 29 weist eine senkrecht zu der Auflagefläche 37 stehende erste Anlagefläche 40 auf, der eine gleiche Anlagefläche 40′ an dem Formstück 28 gegenübersteht. Der Abstand der Anlageflächen 40, 40′ voneinander entspricht dem Soll-Durchmesser einer Gut-Ronde 41 (Voll-Linie). Das Formstück 29 weist eine weitere Anlagefläche 38 auf, der eine gleiche Anlagefläche 38′ an dem Formstück 28 gegenübersteht. Der Abstand dieser Anlageflächen 38, 38′ voneinander ist größer als der mögliche Durchmesser einer Ausschußronde 43 (Strichpunktlinie). Die Anlageflächen 38, 38′ laufen in Rundungen bzw. Verjüngungen 45, 45′ aus zur Anlage einer Ausschußronde 43. Die Formstücke 28, 29 weisen weiterhin voneinander beabstandete Durchbruchflächen 39, 39′ auf die gleichfalls senkrecht zu den Auflageflächen 37, 37′ stehen. Deren Abstand voneinander entspricht dem möglichen Größt-Durchmesser einer zu kleinen, nicht mehr zulässigen Ronde (42) (Punkt-Punkt-Strichlinie).

Fig. 3 zeigt weiterhin noch Druckleitungen 67 zu dem Druckzylinder 31, sowie eine Löseeinrichtung 60 mit einem schwenken Hebel 64, einem durch den Hebel 64 in der gezeigten Stellung gehaltenen Schwenkarm 63, an dem eine Klappe 57 über einen Justierbolzen 61 und eine Haltebolzen 62 gehalten ist. Die Klappe 57 liegt auf dem Auflageblech 23 auf.

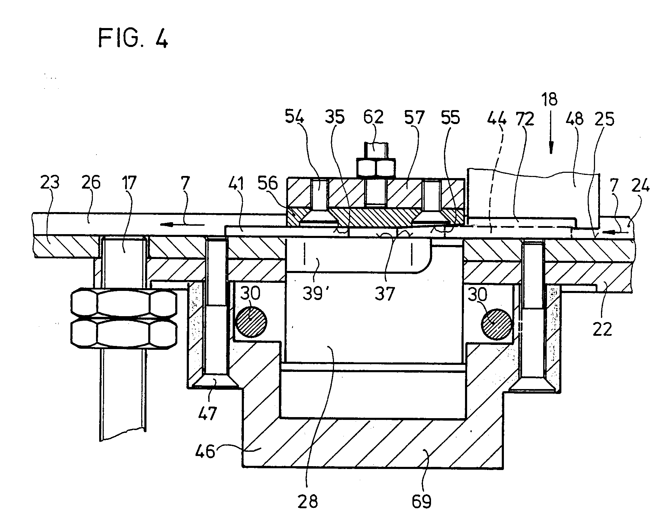

Wie es näher aus Fig. 4 ersichtlich ist, trägt die Klappe 57 über Schraubmittel 54 an ihrer dem Rondenkanal 7 zugewandten Seite eine Dickenlehre 56. Die zu den Auflageflächen 37, 37′ an dem Formstücken 28, 29 beabstandete Dickenlehre 56 weist eine gegen die ankommenden Ronden 41 bis 44 offene, zum Rondenkanal 7 geneigte Schräge 55 auf, die in eine Auflagefläche 35 übergeht. Der Abstand von Auflagefläche 35 an der Dickenlehre 56 von den Auflageflächen 37, 37′ an den Formstücken 28, 29 entspricht in etwa der Soll-Dicke einer Ronde 41, so daß eine zu dicke Ronde 44 (gestrichelte Linie) an der Einlaufschräge 55 hängen bleibt.

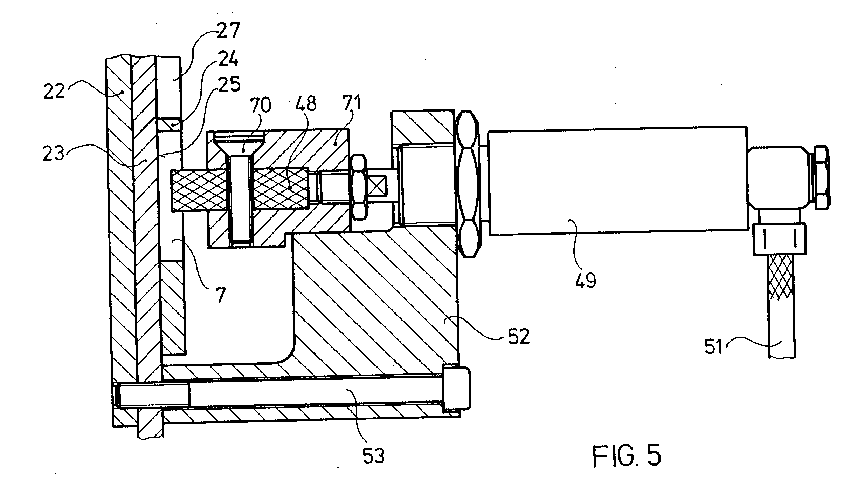

Fig. 4 zeigt weiterhin i.V.m. mit Fig. 2 einen Sensor 17 im auslaufenden Rondenkanal 7 und i.V.m. Fig. 5 eine Stoppereinrichtung 18 mit einem an einem Haltewinkel 52 und über Befestigungsmittel 53 gestellfest angebrachten Druckzylinder 49. Dieser ist über eine Druckleitung 51 in zwei Stellungen beaufschlagbar. Die aus diesem herausgeführte Kolbenstange trägt ein in einem auf dem Haltewinkel 52 verschiebbaren Gleitstück 71 über Befestigungsmittel 70 vor und zurück beweglich gelagertes Haltestück 48. Dieses weist eine Ausnehmung 72 auf, um bei einer an der Einlaufschräge 55 anliegenden Ronde 44 den Zulauf zu der Rondenkontrolleinrichtung 16 zu sperren, ohne den Ausstoß der Ausschußronde 44 zu behindern.

Wird vermittels Sensor 17 das Fehlen einer Ronde im auslaufenden Rondenkanal 7 festgestellt, versperrt zunächst die Stoppereinrichtung 18 den Zulauf zu der Rondenkontrolleinrichtung 16 und der Druckzylinder 31 wird beaufschlagt, so daß das als Blende oder auch als Fallklappe wirkende bewegliche Formstück 29 zurückgezogen wird. Die auszusondernde Ronde 42 bis 44 fällt nach unten auf die Schräge 69 und weiter in den Ausschußbehälter 21. Es versteht sich, daß auch das hier fest installierte Formstück 28 in der gleichen Weise, wie das Formstück 29, beaufschlagbar angeordnet sein kann, um die Reaktionszeit der Rondenkontrolleinrichtung 16 weiterhin zu verkürzen.

## Patentansprüche

1. Vorrichtung zum Aussondern von Ausschußronden (42 bis 44) aus dem Rondenkanal (7) eines Prägeautomaten,
- mit einer Rondenkontrolleinrichtung (16) zum Ermitteln von Ausschußronden (42 bis 44),
- mit einer Einrichtung (17) zum Feststellen einer Unterbrechung in der Zuführung der Rondon (41 bis 44), angeordnet in Durchlaufrichtung hinter der Rondenkontrolleinrichtung (16),
- mit einer Einrichtung (18) zum Stoppen des Zulaufs von Ronden zu der Rondenkontrolleinrichtung (16), und
- mit Mitteln (29, 31, 66, 68) zum Ausstoßen ausgesonderter Ronden (42 bis 44) aus dem Rondenkanal (7),
- wobei in den Grund (25) des Rondenkanals (7) ein Durchbruch (58, 59) zum Durchtritt ausgesonderter Ronden (42 bis 44) eingelassen ist, der zumindest teilweise durch wenigstens ein Formstück (29) verschlossen gehalten wird, und wobei
- das Formstück (29) eine erste Anlagefläche (40) aufweist,
- der eine gleiche Anlagefläche (40') spiegelbildlich an einem vorrichtungsfesten Formstück (28) gegenübersteht zum Weiterleiten von Ronden (41) mit Soll-Durchmesser, und das Formstück (29) eine zweite Anlagefläche (38) aufweist, der eine gleiche Anlagefläche (38') spiegelbildlich an dem vorrichtungsfesten Formstück (28) gegenübersteht und
- die Anlageflächen (38, 38') in Durchlaufrichtung der Ronden (41 bis 44) vor den ersten Anlageflächen (40, 40') angeordnet sind und in einen sich auf den Soll-Durchmesser der Ronden (41) verjüngenden Bereich (45) zum Blockieren einer Ronde (43) mit zu großem Durchmesser übergehen,
**gekennzeichnet durch** folgende Merkmale:
- das Formstück (29) ist in Art einer Blende vor dem Durchbruch (58, 59) über einen Druckzylinder (31), den Durchbruch (58, 59) kurzzeitig freigebend, beweglich gelagert,
- die Formstücke (28, 29) weisen höhengleich, in Flucht mit dem Grund (25) des Rondenkanals (7) verlaufende Auflageflächen (37, 37') auf,
- zu denen die ersten und zweiten Anlageflächen (40, 40', 38, 38') senkrecht stehen,
- die Formstücke (28, 29) weisen auf Abstand voneinander angeordnete Durchbruchflächen (39, 39') auf,
- deren Abstand voneinander dem Durchmessermaß einer zu kleinen Ronde (42) entspricht, und
- der Rondenkanal (7) ist in seiner Höhe begrenzt durch eine vorrichtungsfeste Dickenlehre (56),
- mit einer Auflagefläche (35), die beabstandet ist zu den Auflageflächen (37, 37') an den Formstücken (28, 29), und
- einer Einlaufschräge (55), die geneigt ist zur Durchlaufrichtung der Ronden (41 bis 44) für eine große Öffnungsweite zum Erfassen auch in der Dicke abweichender Ronden (44).

2. Vorrichtung nach Anspruch 1, **dadurch gekennzeichnet**, daß die Formstücke (28, 29) in ihren Anlageflächen (38, 38', 40, 40') und Durchbruchflächen (39, 39') einander spiegelgleich sind.

3. Vorrichtung nach Anspruch 1, **dadurch gekennzeichnet**, daß die Formstücke (28, 29) zueinander und in Bezug auf den Rondenkanal (7) einstellbar angeordnet sind.

4. Vorrichtung nach Anspruch 1, **dadurch gekennzeichnet**, daß die Formstücke (28, 29) den Rondenkanal (7) innerhalb der Rondenkontrolleinrichtung (16) nach unten hin zumindest teilweise verschließen.

5. Vorrichtung nach Anspruch 1, **dadurch gekennzeichnet**, daß Dickenlehre (56) und Brückenteil (46) austauschbar sind.

6. Vorrichtung nach Anspruch 1, **dadurch gekennzeichnet**, daß das Formstück (28), ggf. beide Formstücke (28, 29) über Druckzylinder (31) beweglich angeordnet sind.

## Claims

1. Device for segregating reject round blanks (42 to 44) from the round blanks supply duct (7) of an automatic embossing machine,
- having a round-blanks checking arrangement (16) for detecting reject round blanks (42 to 44),
- having an arrangement (17) for detecting an interruption in the supply of round blanks (41 to 44), arranged downstream of the round-blanks checking arrangement (16) in the feed direction,
- having an arrangement (18) for stopping the feed of round blanks to the round-blanks checking arrangement (16), and
- having means (29, 31, 66, 68) for ejecting segregated round blanks (42 to 44) from the round blanks supply duct (7),
- an opening (58, 59) for the passage of segregated round blanks (42 to 44) being let into the base (25) of the round blanks supply duct (7), being held at least partially closed by at least one shaped piece (29), and
- the shaped piece (29) having a first contact surface (40),
- opposite which, in mirror symmetry, on a shaped piece (28) fixed to the device is an identical contact surface (40') for guiding onwards round blanks (41) of the set diameter, and the shaped piece (29) having a second contact surface (38), opposite which, in mirror symmetry, on the shaped piece (28) fixed to the device, is an identical contact surface (38') and
- the contact surfaces (38, 38') being arranged upstream of the first contact surfaces (40, 40') in the feed direction of the round blanks (41 to 44) and merge into a region (45) tapering to the set diameter of the round blanks (41) for blocking a round blank (43) of too large a diameter,
characterised by the following features:
- the shaped piece (29) is mounted in front of the opening (58, 59) in the manner of a shutter, being movable by way of a pressure cylinder (31) to briefly expose the opening (58, 59),
- the shaped pieces (28, 29) have bearing surfaces (37, 37') which extend at the same height in alignment with the base (25) of the round blanks supply duct (7),
- to which surfaces the first and second contact surfaces (40, 40', 38, 38') are perpendicular,
- the shaped pieces (28, 29) have mutually spaced opening surfaces (39, 39'),
- the spacing of which relative to one another corresponds to the diameter of a round blank (42) which is too small and
- the round blanks supply duct (7) is limited in its height by a thickness gauge (56) fixed to the device,
- with a bearing surface (35) which is positioned at a distance from the bearing surfaces (37, 37') on the shaped pieces (28, 29) and
- a run-in bevel (55) which slopes relative to the feed direction of the round blanks (41 to 44) to provide a large opening width for catching even those round blanks (44) with a deviating thickness.

2. Device according to Claim 1, characterised in that the shaped pieces (28, 29) are mirror-symmetrical to one another in their contact surfaces (38, 38', 40, 40') and opening surfaces (39, 39').

3. Device according to Claim 1, characterised in that the shaped pieces (28, 29) are arranged in a manner which allows them to be adjusted relative to one another and in relation to the round blanks supply duct (7).

4. Device according to Claim 1, characterised in that the shaped pieces (28, 29) at least partially close the round blanks supply duct (7) at the bottom within the round-blank checking arrangement (16).

5. Device according to Claim 1, characterised in that the thickness gauge (56) and the bridge part (46) are replaceable.

6. Device according to Claim 1, characterised in that the shaped piece (28) or, if required, both shaped pieces (28, 29) are arranged in a manner which allows them to be moved via pressure cylinders (31).

## Revendications

1. Dispositif pour exclure des flans ronds de rebut (42 à 44) du canal à flans (7) d'une machine automatique de frappe, comportant :
- une unité de contrôle des flans (16) pour détecter des flans de rebut (42 à 44),
- une unité (17) pour détecter une interruption dans l'amenée des flans (41 à 44), disposée en aval de l'unité de contrôle des flans (16) par rapport au sens de passage,
- une unité (18) pour arrêter l'amenée de flans à l'unité de contrôle des flans (16), et
- des moyens (29, 31, 66, 68) pour éjecter des flans à exclure (42 à 44) du canal à flans (7),
- où le fond (25) du canal à flans (7) comporte, pour laisser passer des flans à exclure (42 à 44), un orifice (58, 59) qui est fermé au moins partiellement par au moins une pièce profilée (29), et où
- la pièce profilée (29) comporte une première surface d'appui (40) qui est symétrique d'une même surface d'appui (40') disposée en face d'elle sur une pièce profilée fixe (28) pour conduire plus loin des flans (41) de diamètre prescrit, la pièce profilée (29) comportant une seconde surface d'appui (38) qui est symétrique d'une même surface d'appui (38') disposée en face d'elle sur la pièce profilée fixe (28),
- les surfaces d'appui (38, 38') étant disposées en amont des premières surfaces d'appui (40, 40') par rapport au sens de passage des flans (41 à 44) et se raccordant à une zone (45) de rétrécissement jusqu'au diamètre prescrit des flans (41) pour bloquer un flan (43) de trop grand diamètre,
**caractérisé** par les particularités suivantes :
- la pièce profilée (29) est montée à la manière d'un obturateur devant l'orifice (58, 59) et est mobile au moyen d'un vérin à pression (31) pour libérer brièvement l'orifice (58, 59),
- les pièces profilées (28, 29) présentent des surfaces de support (37, 37') de même niveau, disposées à fleur du fond (25) du canal à flans (7)
- et par rapport auxquelles les premières et secondes surfaces d'appui (40, 40', 38 38') s'étendent perpendiculairement,
- les pièces profilées (28, 29) présentent des surfaces d'évidement (39, 39') disposées à distance l'une de l'autre,
- ladite distance correspond à la valeur du diamètre d'un flan trop petit (42), et
- le canal à flans (7) est limité en hauteur par un gabarit d'épaisseur (56) fixe dans le dispositif,
- pourvu d'une surface d'appui (35) qui se trouve à distance des surfaces de support (37, 37') des pièces profilées (28, 29) et
- pourvu d'un biseau d'entrée (55) qui est incliné par rapport à la direction de passage des flans (41 à 44) afin d'offrir une grande épaisseur d'ouverture pour accepter aussi des flans (44) présentant des écarts d'épaisseur.

2. Dispositif selon la revendication 1, **caractérisé** en ce que les pièces profilées (28, 29) sont symétriques l'une de l'autre pour ce qui concerne leurs surfaces d'appui (38, 38', 40, 40') et leurs surfaces d'évidement (39, 39').

3. Dispositif selon la revendication 1, **caractérisé** en ce que les pièces profilées (28, 29) sont ajustables l'une par rapport à l'autre et par rapport au canal à flans (7).

4. Dispositif selon la revendication 1, **caractérisé** en ce que les pièces profilées (28, 29) ferment au moins partiellement le canal à flans (7) du côté du bas, à l'intérieur de l'unité de contrôle des flans (16).

5. Dispositif selon la revendication 1, **caractérisé** en ce que le gabarit d'épaisseur (56) et l'élément de pont (46) sont remplaçables.

6. Dispositif selon la revendication 1, **caractérisé** en ce que la pièce profilée (28) ou, le cas échéant, les deux pièces profilées (28, 29) sont mobiles au moyen d'un vérin à pression (31).
